# EUROPEAN PATENT APPLICATION

(11) **EP 3 547 167 A1**
(43) Date of publication of application: **02.10.2019**
(21) Application number: 18164590.4
(22) Date of filing: 28.03.2018
(51) Int. Cl.: G06F 17/30

(54) **INFORMATION RETRIEVAL**

(71) Applicant: Koninklijke Philips N.V., 5656 AE Eindhoven (NL)
(72) Inventor: SERLIE, Iwo Willem Oscar, 5656 AE Eindhoven (NL); BENTLAGE, Berry, 5656 AE Eindhoven (NL)
(74) Representative: de Haan, Poul Erik

(57) **Abstract**

Presented are concepts for information retrieval from a document for clinical purposes. Once such concept comprises generating contextual information for a document. The contextual information may be generated by identifying locations in the document which include content relevant to particular clinical contexts. For each of the various locations, a count value corresponding to a clinical context may be maintained. The count values may be used to indicate the number of times locations are identified as having content for a particular clinical context. Such contextual information may thus be used for identifying sections or locations in the document that contain pertinent information based on an identified clinical context.

## Description

### FIELD OF THE INVENTION

This invention relates to the field of information retrieval and more particularly to the retrieval of information from a document for clinical purposes.

### BACKGROUND OF THE INVENTION

Many sources of documents for clinical use exist and the clinical data or information contained therein may be extensive and densely populated. Retrieval of information from documents for clinical purposes (such as Clinical Decision Support (CDS) for example) may therefore be resource intensive and/or difficult.

Also, where there may be multiple clinical contexts and/or interacting clinical issues, conventional systems are unable to automatically retrieve pertinent information from multiple documents. Instead, users are required to read or search entire documents in their entirety in order to identify information of interest or potential use.

With provision of relevant and/or specific information from documents being of paramount importance for clinical purposes such as CDS, there remains a need for approaches to retrieving information from documents in a manner which is simple, effective and/or automatic.

### SUMMARY OF THE INVENTION

The invention aims to at least partly fulfil the aforementioned needs. To this end, the invention provides devices, systems and methods as defined in the independent claims. The dependent claims provide advantageous embodiments.

There is provided a method for generating contextual information for a document comprising content at various locations within the document, the method comprising: associating a document map with the document, wherein the document map comprises a plurality of map sections, and wherein each of the plurality of map sections is associated with a respective location within the document; for each of the plurality of map sections, maintaining a count value corresponding to a clinical context; and in response to content at a first location in the document being identified for the clinical context, incrementing the count value for the map section associated with the first location within the document.

Proposed is a contextual document learning approach which provides information for a document. Such contextual information may be thought of as supplementary information that is associated with the document. The contextual information may be used for identifying sections or locations in the document that contain pertinent information based on an identified clinical context.

The contextual information may be generated using a learning approach that identifies (e.g. tags) locations in the document which include content relevant to particular clinical contexts. By way of example, the contextual information may comprise a map of locations in the associated document, wherein the map identifies locations with content for clinical contexts. For each of the various mapped locations, a count value may be provided which tracks the number of times the location is identified as having content for a particular clinical context (e.g. confirming a search result for the identified clinical context, or identified by a user).

A clinical context may, for example, comprise information about a clinical specialist using clinical equipment in a certain state on a patient with a specific problem and action to obtain an expected outcome. Put another way, a clinical context may be representative of one or more clinical parameters of a clinical state or environment. Clinical models may be used to represent the context and may be expressed in terms of Fast Healthcare Interoperability (FHIR) profiles/structures. The FHIR specification is a known standard for exchanging healthcare information electronically. Accordingly, clinical models used to represent a clinical context may be expressed using data according to a profiles adopting a standard way of describing clinical context and inheritance between context models (with a focus on content). For example, a clinical procedure context might be expressed using the FHIR procedure model.

Further, a context may be specialization (e.g. limited version) of another context. Thus, a concept of ranking matches may be employed, where the ranking order is based on how generalised or specific each context is.

Provision of contextual information that is associated with a document may help to identify content from a location of the document which is relevant to a particular clinical context. Such proposals may thus increase the clinical value of document by enabling information within the document to be selected and retrieved (e.g. extracted and displayed or graphically represented) in an automated manner according to a specific clinical context. This may support assessment, enable improved focus on a diagnosis, and/or support clinical planning. Improved CDS may therefore be facilitated by proposed concepts. Also, proposed embodiments may support navigation through multiple documents with respect to one or more clinical contexts. For instance, an embodiment may help a user to identify and retrieve information from various document sources.

Proposed embodiments may provide a document map comprising structured information that identifies which locations in an associated document include content that has been identified as pertinent, relevant or important for a specific clinical context. The document map may have a count value for each map section, thus expressing the number of times each section of the document has been identified/selected for a clinical context. Such a document map may be generated from repeated searching or learning processes for a certain clinical context, wherein the document map may be thought of as a 'heat' map indicating 'hot' and 'cold' areas of the document for the clinical context. For instance, a document map may comprise a grid having a count value for each grid element.

Accordingly, concepts are proposed which may enrich a document for clinical purposes by creating contextual information using a learning approach which tracks which sections of the document are selected for a clinical context. The contextual information associated with a document may leveraged to facilitate the identification and extraction of information from the documents with respect to a selected clinical context.

A clinical context may be associated with a clinical model for provisioning clinical data. As mentioned above, a clinical model may be used to describe a clinical context, and such a clinical model may be expressed using one or more standardised profiles or structures (e.g. the FHIR specification). Parameters of a clinical context may, for example include clinical variables such as: clinical specialist; patient; disease; physiological trait/characteristic; and clinical equipment.

In this regard, it is to be understood that a clinical context may identified or defined in an approximate manner. In other words, embodiment may cater for 'fuzzy' clinical contexts that are approximate in definition.

Some proposed embodiments may therefore be thought of supplementing a document with document map that identifies document sections of interest for a particular clinical context. Identification of content within the document may then be made dependent on a selected clinical context and information of the document map relating to the selected clinical context. For instance, a clinical context of interest may be defined and document content relating to the clinical context of interest may be identified based on the document map (e.g. emphasised, highlighted, etc.). Similarly, data not relating to the clinical context of interest may be identified in an alternative manner (e.g. hidden, de-emphasized, etc.). Embodiments may therefore provide a system that facilitates identification and/or retrieval of information from a document according to a clinical context, and this may be implemented in an automated manner.

Advantages associated with proposed embodiments may therefore include: (a) localization of important or pertinent clinical information without extensive searching efforts; (b) automated retrieval of document content with respect to selected clinical context; (c) increased clinical value of available documents though identification of document content the relative to a clinical context (e.g. supporting assessment, focussing on a diagnosis, supporting planning, etc.).

Some proposed embodiments may be thought of as mapping document content according to patterns of use for a specific clinical context. A user may therefore be provided with a document map identifying document portions/sections that are more relevant to requirements/needs.

The document-specific contextual information generated by proposed embodiments may be representative of locations in the document that comprise content relevant to a clinical context. This may support the identification and/or extraction of clinical context specific information in a manner which is simple and automated. Simple and intuitive retrieval of information from a document for a specific clinical context may thus be facilitated by proposed embodiments. For instance, by associating a document map with a document, and by maintaining a count value corresponding to a clinical context for each of the plurality of map sections, contextual information may be generated (e.g. via training or learning) by incrementing corresponding count values when content a locations in the document is identified for various clinical contexts.

For each of the plurality of map sections, a count value corresponding to a second clinical context may be maintained. Then, in response to content at a second location in the document being identified for the second clinical context, the count value for the map section associated with the second location within the document and corresponding to the second clinical context may be incremented. In this way, the contextual information may relate to a plurality of clinical context (and thus not be limited to being useful with regard to only a single clinical context). Put another way, embodiments may generate contextual information for a document with respect to multiple different clinical contexts.

In some embodiments, in response to content at a first location in the document being identified for the clinical context, the map section associated with the first location within the document may be augmented with at least a portion of the content at the first location. Put another way, a map section may be supplemented with content from its associated location within the documents. The contextual information may thus actually include document content, facilitating content retrieval even when the document is unavailable for example.

The document may comprise a plurality of portions of content at differing locations in a graphical representation of the document. Each of the plurality of map sections may then be associated with a respective different portion of content. The document map may therefore correspond with a graphical representation of the document. In this way, a graphical representation of the document map may facilitate an understanding of the relative location(s) of map sections and the corresponding document content. The document map may thus indicate the relative location(s) of content within document that is relevant to an identified clinical context. Further, the location within the document associated with a first map section may be defined such that it comprises a boundary corresponding to the shape of the portion of content associated with the first map section in the graphical representation of the document. Map sections may thus indicate both the location and boundary of content portions within the documents.

For instance, the document map may overlay the document it is associated with in a graphical representation of document map and document. This may facilitate quick, easy and intuitive navigation of the document (and it content) with respect to a clinical context of interest.

Some proposed embodiments may further comprise receiving a user input designating clinical context and identifying content of the document. Results from human searching of a document with respect to a clinical context may therefore be employed for generating the contextual information. Teaching or learning process that leverage human inputs, such as supervised learning concepts, may thus be employed by embodiments.

The document may comprise a document useful for one or more clinical purposes. A document could be an external source such as a clinical guideline providing a structured source of recommendations and contra-indications, or a document may be an internal source such as personal notes comprising actions or information in the form of images and text. Another example of a document might be a product manual where only appropriate sections may be for a given context of use. A document may comprise: a medical record; medical reference book; clinical process definition; medical research literature; or patient/subject notes. Accordingly, document content may comprise at least one of: an image; text; and numerical data.

According to another aspect of the invention, there is provided a method for retrieving information from a document. The method comprises: generating contextual information for the document according to a proposed embodiment; and selecting content at one or more locations in the document, based on the count value for each of the plurality of map sections.

Proposed embodiments may thus help a user (such as a medical practitioner, doctor, surgeon, technician, etc.) to be presented with relevant or important clinical information from a document in manner which takes account of a clinical context. Document content identified in consideration of a clinical context may enable a user to focus on particular clinical information of interest or relevance, thus reducing complexity or confusion that may otherwise be caused by presenting excessive and/or irrelevant information.

Embodiments may increase a value of clinical information by employing contextual information associated with a document to identify document content (such as clinical information) in a manner that accounts for a specific (e.g. selected, chosen or current) clinical context. Embodiments may increase the clinical value of a document by employing contextual information associated with the document rather than relying on technical expertise of a user.

In some embodiments, the plurality of map sections may be ranked based on the count values. Content at the location in the document associated with highest ranked map section may then be selected. The count values may thus provide for the ordering or rating of map sections with respect to a clinical context. In this way, map sections of particular relevance or importance for a specific clinical context may be quickly and easily identified. For instance, only map sections having count values in excessive of a predetermined threshold count value may be identified, thereby preventing irrelevant and/or extraneous information from being presented.

Proposed embodiment may further comprise the step of obtaining an indication of selected clinical context of the plurality of clinical contexts. The process of selecting content may then comprise selecting content at one or more locations in the document based on a count value corresponding to the selected clinical context for each of the plurality of map sections. This may, for example, cater for user selection of one of a plurality of clinical contexts. A clinical context may therefore be selected and, based on the selected context and the count values for the map section, document content may then be automatically selected. Simple and intuitive document content retrieval concepts may therefore be provided that enable a user to select a clinical context from an available set of clinical contexts.

Embodiments may generate an output signal for communicating information from the document based on the selected content. For example, the output signal may be representative of a selected content at one or more locations in the document. Such an output signal may comprise a control signal for controlling the display of selected document content. In this way, content at one or more locations in the document may be selected and used to control the display of information to a user. Only document content identified as being relevant or important with respect to a clinical context may be displayed, thereby preventing irrelevant and/or extraneous information from being provided to a user.

According to another aspect, there is provided a computer program product for retrieving information from a document, wherein the computer program product comprises a computer-readable storage medium having computer-readable program code embodied therewith, the computer-readable program code configured to perform all of the steps of a proposed embodiment.

Thus, there is also provided a computer system comprising: a computer program product according to proposed embodiment; and one or more processors adapted to perform a method according to a propose concept by execution of the computer-readable program code of said computer program product.

According to another aspect of the invention, there is provided a system for generating contextual information for a document comprising content at various locations within the document. The system comprises: an association module adapted to associate a document map with the document, wherein the document map comprises a plurality of map sections, and wherein each of the plurality of map sections is associated with a respective location within the document; and a processing module adapted: for each of the plurality of map sections, to maintain a count value corresponding to a clinical context; and, in response to content at a first location in the document being identified for the clinical context, to increment the count value for the map section associated with the first location within the document.

According to yet another aspect of the invention, there is provided a system for retrieving information from a document. The system comprises a system for generating contextual information for the document according to a proposed embodiment; and a content selection component adapted to select content at one or more locations in the document, based on the count value for each of the plurality of map sections.

The system for generating contextual information for the document may be remotely located from the content selection component, and contextual information may thus be communicated via a communication link. In this way, a user (such as a medical professional) may have an appropriately arranged system that can receive select content/information at a location remotely located from the system for generating contextual information for the document. Embodiments may therefore enable a user to remotely retrieve and review information from a document information using local system (which may, for example, comprise a portable display device, such as a laptop, tablet computer, mobile phone, PDA, etc.).

The system may further comprise: a server device comprising the system for generating contextual information for the document; and a client device comprising content selection component. Dedicated data processing means may therefore be employed for the purpose of generating contextual information for the document, thus reducing processing requirements or capabilities of other components or devices of the system.

The system may further comprise a client device, wherein the client device comprises the content selection component and a display unit. In other words, a user (such as a doctor or medical professional) may have an appropriately arranged client device (such as a laptop, tablet computer, mobile phone, PDA, etc.) which processes received data in order to content selection component and generate a display control signal.

Thus, it will be understood that processing capabilities may therefore be distributed throughout the system in different ways according to predetermined constraints and/or availability of processing resources.

These and other aspects of the invention will be apparent from and elucidated with reference to the embodiment(s) described hereinafter.

### BRIEF DESCRIPTION OF THE DRAWINGS

Examples in accordance with aspects of the invention will now be described in detail with reference to the accompanying schematic drawings, in which:
Figure 1 is an exemplary flow diagram of a method for generating contextual information for a document according to an embodiment;
Figure 2 is an exemplary flow diagram of a method for retrieving information from a document according to an embodiment, wherein the method employs the method of Figure 1;
Figure 3 is an illustration summarising a concept for generating contextual information for a document and for retrieving information from the document in accordance with proposed concepts;
Figure 4 is a simplified block diagram of a system according to an embodiment; and
Figure 5 is a simplified block diagram of a computer within which one or more parts of an embodiment may be employed.

### DETAILED DESCRIPTION OF THE EMBODIMENTS

Proposed is a concept for enabling the provision of contextual information for document, where in the contextual information is design to assist the identification of document content that is relevant or important for a specific clinical context. The contextual information may therefore be associated with a document and be thought of as supplementary, complementary or additional information that can be leveraged for the identification and extraction of document content in accordance with an identified clinical context. Such a clinical context may be described, identified or otherwise defined according to a value of one or more parameters of a clinical state, setting, environment or circumstance.

Such contextual information may be generated using (machine-based and/or human-assisted) learning approaches that identify (e.g. tag, mark, confirm, etc.) locations in the document which include content relevant to one or more clinical contexts. The contextual information may comprise a map of locations in the associated document, wherein the map identifies locations in the document comprises content that has been identified or selected for a clinical context. The map may thus be considered to be a 'relevance map' or 'heat map' which indicates locations in the document that include content pertinent to a particular clinical context.

Contextual information provided by such proposals may thus facilitate simple and intuitive navigation and identification of document content in consideration of a clinical context (e.g. clinical setting, state or environment), for example by enabling pertinent or relevant document locations to be visualized and/or navigated with regard to a clinical context. Improved CDS may therefore be provided by proposed embodiments.

Embodiments of the present invention are therefore directed toward enabling the presentation of document content with reference to a clinical context so as to facilitate or enhance a CDS process. Further, embodiments may be aimed at enabling the display or visualisation of relevant or important document content with simplicity, accuracy and clinical context while providing enough detail so that a clinical assessment or decision is facilitated or supported (preferably with increased efficiency and/or reliability). Generated contextual information model may be used to identify or indicate content in clinical documents, which may assist in clinical support assessment, medical diagnosis and/or support planning for example.

Embodiments are based on the insight that the identification of document content may be enhanced by employing contextual information that can be combined (associated) with the document and then leveraged in consideration of a selected clinical context.

A clinical context may provide or define information descriptive of one or more parameters that can vary according to a clinical setting, state or environment.

A clinical model may be used to describe or define a clinical context. By way of example, a clinical model representing a clinical context may adopt a standardised format or structure (such as a FHIR profile). Further, such a clinical model may comprise a description of inheritance or relationship between models. Some proposed embodiments may therefore be thought of combining clinical context information with a document so as to indicating document content relevant to a specific clinical context. Thus, there may be provided a medical system that facilitates interaction with structured, supplemented or augmented documents and which facilities identification and extraction of document content with reference to a clinical context.

Illustrative embodiments may be utilized in many different types of clinical, medical or patient-related environments, such as a hospital, doctor's office, ward, care home, person's home, etc. In order to provide a context for the description of elements and functionality of the illustrative embodiments, the Figures are provided hereafter as examples of how aspects of the illustrative embodiments may be implemented. It should therefore be appreciated the Figures are only examples and are not intended to assert or imply any limitation with regard to the environments, systems or methods in which aspects or embodiments of the present invention may be implemented.

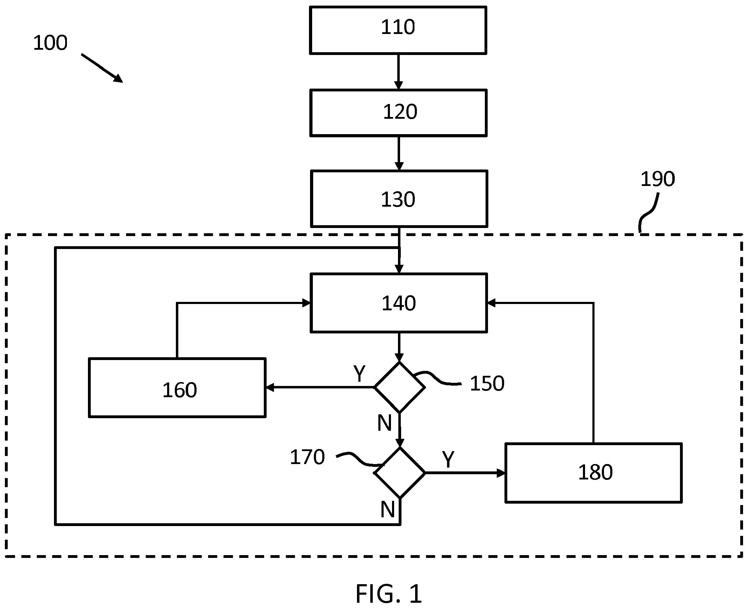

Referring now to Figure 1, there is depicted an exemplary flow diagram of a method 100 for generating contextual information for a document according to an embodiment. The document comprises content at various locations within the document and, by way of example, the content may comprise an image, text, and/or numerical data.

In step 110, a document map is associated with the document. Here, the document map comprises a plurality of map sections and each of the plurality of map sections is associated with a respective location within the document. More specifically, since the document comprises a plurality of portions of content at differing locations in a graphical representation of the document, each of the plurality of map sections is associated with a respective different portion of content. Further, a location within the document associated with a map section is defined such that it comprises a boundary corresponding to the shape of the portion of content associated with the map section. The map sections may therefore indicate both the location and boundary of content portions within the documents.

Accordingly, each of the plurality of map sections are associated with a respective different portion of content so that the document map corresponds with a graphical representation of the document. In this way, a graphical representation of the document map facilitates an understanding of the relative location(s) of map sections and the corresponding document content. For instance, the document map may be considered an overlay for the document (when represented graphically).

Next, in step 120, a (first) count value corresponding to a (first) clinical context is initiated and stored (e.g. maintained in a storage location) for each of the plurality of map sections. Further, in step 130, a (second) count value corresponding to a second clinical context is initiated and stored (e.g. maintained in a storage location) for each of the plurality of map sections.

The method then proceeds to step 140 wherein selection or identification of content within the document for an associated clinical context is monitored. By way of example, such monitoring may comprise detecting an instance of document content being selected as a result of an automated or human search process. For instance, this may include detecting the receipt of a user input designating a clinical context and identifying content of the document.

When content (e.g. at a first location) of the document is selected or identified (e.g. as a result of a search and/or by a user), the method proceeds to step 150. In step 150, it is determined whether or not the document content has been identified for the (first) clinical context. If it is determined that the document content has been identified for the (first) clinical context, the method proceeds to step 160, wherein the count value for the map section associated with the location of the document content is incremented. For example, if the selected/identified document content is at a first location in the document, and the document content has been identified for the first clinical context, the (first) count value for the map section associated with the first location of the document content is incremented. The method then returns back to step 140 and selection or identification of further content within the document for an associated clinical context is once again monitored.

If, on the other hand, it is determined that the document content has not been identified for the (first) clinical context, the method proceeds from step 150 to step 170. In step 170, it is determined whether or not the document content has been identified for the second clinical context.

If it is determined that the document content has been identified for the second clinical context, the method proceeds to step 180, wherein the (second) count value for the map section associated with the location of the document content and corresponding to the second clinical context is incremented. For example, if the selected/identified document content is at a first location in the document, and the document content has been identified for the second clinical context, the (second) count value for the map section associated with the first location of the document content and corresponding to the second clinical context is incremented. The method then returns back to step 140 and selection or identification of further content within the document for an associated clinical context is once again monitored.

If, on the other hand, it is determined that the document content has not been identified for the second clinical context, the method proceeds from step 170 back to step 140 (wherein selection or identification of further content within the document for an associated clinical context is once again monitored).

This process of monitoring for selected/identified content and incrementing count values corresponding to the content location and clinical context may be repeated or continued so as to learn about the document content and generate contextual information for the document. Step 140 through 180 of the method of Figure 1 (as indicated by the dashed box labelled 190 in Figure 1) may thus be considered a learning process. This learning process may employ automatic and/or human selection/identification of document content and, for this reason, the learning process employed by embodiment may leverage machine-learning concepts, supervised learning concepts and/or a human input.

It will be appreciated that execution of the method of Figure 1 provides contextual information for identifying sections or locations in the document that contain pertinent information with respect to an identified clinical context, and this information may then be leveraged for the purpose of providing information from the document to a user (such as a medical professional for example) with regard to a clinical context. Proposed concepts may therefore provide a method for retrieving information from a document which incorporates an embodiment of generating contextual information for the document.

For example, one may consider interaction with a document supplemented with contextual information generated in accordance with an embodiment. For instance, if a user selects a clinical context, document content relevant or pertinent to the selected clinical context can be identified (e.g. highlighted) within a graphical representation of the document (based on the contextual information). Thus, a selection of a clinical context may result in certain document content being highlighted in a displayed version of the document. Similarly, selection of a different clinical context may result in alternative document content being highlighted in a displayed version of the document.

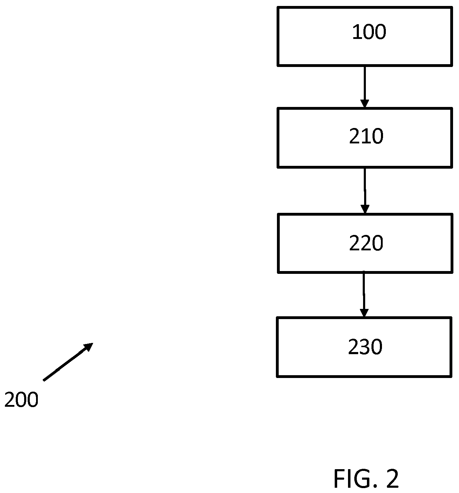

By way of further example, Figure 2 depicts an exemplary flow diagram of a method for retrieving information from a document according to an embodiment, wherein the method 200 employs the method 100 of Figure 1.

More specifically, the method 200 begins with the step 100 of generating contextual information for the document according to the proposed embodiment of Figure 1. Execution of step 100 therefore results in the provision of contextual information for identifying sections or locations in the document that contain pertinent information with respect to one or more clinical contexts.

In step 210, an indication of a selected clinical context is obtained. Here, an input signal is received which is representative of the selected clinical context.

Next, in step 220, content at one or more locations in the document is selected based on the count value for each of the plurality of map sections. In particular, the process of selecting content comprises selecting content at one or more locations in the document based on a count value corresponding to the selected clinical context for each of the plurality of map sections.

A control signal is then generated in step 230 based on the selected content, wherein the control signal is for controlling a display device to display the selected content from the document.

By way of further example, however, the control signal can also be generated based on a display position of the selected clinical context. In this way, display considerations (such available display space, already-displayed graphical elements, overlapping content, etc.) may be accounted for so as to ensure correct or appropriate display instructions are provided by the control signal.

The document content for the clinical context may then be displayed to a user in accordance with the generated control signal.

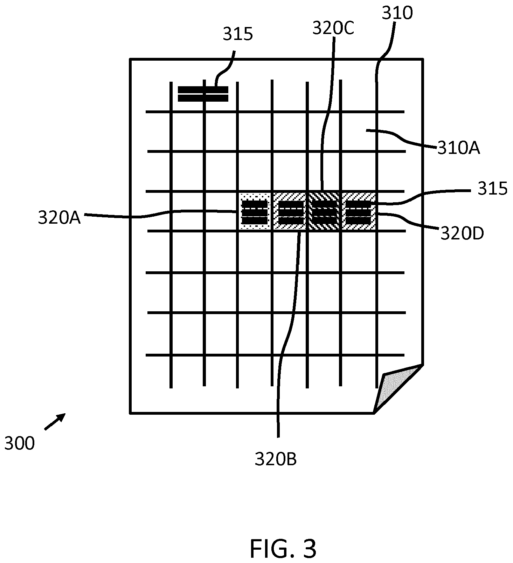

Referring now to Figure 3, there is provided an illustration summarising concepts according to propose embodiments. Here, a contextual document learning approach is provided based on a document map. A searching approach is also provided, wherein the search may be aware of a current or selected clinical context.

Firstly, there is provide a learning process for generating contextual information. Results from the learning may then be applied in a document searching process.

A grid 310 is applied to a document 300 comprising various portions of content 315. Grid elements 310A are then tagged or associated with a clinical context (based on document usage). For example, in response to a user selecting (e.g. approving, identifying, or otherwise indicating) content within the document for a specific clinical context, the grid element(s) containing the location of the selected content has its count value for the clinical context increased. This might, for instance, be implemented in response to document being identified as a search result. Alternatively, or additionally, an automated agent or process may selected document content as a result of undertaking a (supervised or unsupervised) learning process.

By way of further example, one may consider a user searching the document 300. A result of the search may comprise a set of (text) results (lines) contained within first 320A to fourth 320D grid elements. Results that coincide with grid elements for various clinical contexts may be ranked differently (e.g. using a grid element hit count values for an accumulation search result for different clinical contexts).

Accordingly, it will be appreciated that each document map (e.g. grid) may be associated with one or more clinical contexts. A document map associated with a plurality of clinical context may be thought of as a being a combination of multiple document maps, each of which are associate with a respective, different clinical context.

Also, although the embodiment of Figure 3 is illustrated as having a regular grid pattern with equally spaced, sized and shaped grid elements, a document map may alternatively comprise elements that are space, sized and/or shaped to closely correspond with document content. For example, grid elements may be adapted to comprise bounding shapes around a various portions of document content.

An example implementation will now be detailed, wherein the document 300 is search with respect to various different clinical contexts.

In a first learning step, the first and second clinical contexts A and B are selected and content in the second 320B, third 320C and fourth 320D grid elements is selected. A count value for each of the second 320B, third 320C and fourth 320D grid elements, and corresponding to the first and second clinical contexts A and B, is then incremented (e.g. from "0" to "1").

In a second learning step, the first clinical context A is selected and content in the first 320A, second 320B, third 320C and fourth 320D grid elements is selected. A count value for each of the first 320A, second 320B, third 320C and fourth 320D grid elements, and corresponding to the first clinical context A, is then incremented (e.g. from "0" to "1" for the first grid element, and from "1" to "2" for the second, third and fourth grid elements).

In a third learning step, the first clinical context A is selected and content in the third 320C grid element is selected. A count value for the third 320C grid element, and corresponding to the first clinical context A, is then incremented (e.g. from "2" to "3").

As indicated in Figure 3 by the filling pattern for the various grid elements, the count values may be indicative of gird elements (and associated document content) that are most relevant to a selected clinical context. For example, if seeking to identify and retrieve document content from the document 300 for the first clinical context A, the grid elements may be ranked according to their count values and it can be identified that content contained within the third grid element 320C is considered most relevant. Put another way, when searching the document 300 for a selected clinical context, the count values of the grid elements (for the selected clinical context) can be used to rank results.

Embodiments may thus facilitate a contextual document search that takes account of a current clinical context and identifies document content relevant to the clinical context. Further, proposed embodiments may be applicable to documents where potential clinical context(s) were unknown at the time the document was created.

It will therefore be appreciated that any clinical informatics solution where external document sources are integrated into a clinical workflow may benefit from proposed embodiments.

By way of further example, procedural steps of a proposed embodiment may be summarised as follows:
(i) A database is arranged to store clinical models via a unique ID. The actual model is irrelevant;
(ii) A clinical context is arranged to store a subset of clinical models via a unique ID;
(iii) A document is associated with a grid pattern, where each grid cell/element is adapted to be tagged with a model ID and corresponding frequency (or count) of usage. This may be maintained in a separate database;
(iv) A component is arranged to retrieve a query from an end user resulting in a selected portion of document content;
(v) A document component is arranged to select the grid cells that intersect or contain the selected portion of document content;
(vi) A component is arranged to link/associate a cell from the selection of grid cells with a model ID from a clinical context. If a tag already exists, the frequency/count value for the model ID of the cell is incremented, thus resulting in a model-driven document heat map; and
(vii) A component is arranged to rank search results based on intersecting cells (e.g. accumulating all frequency/count values for a selected text and ranking a results based on these accumulations).

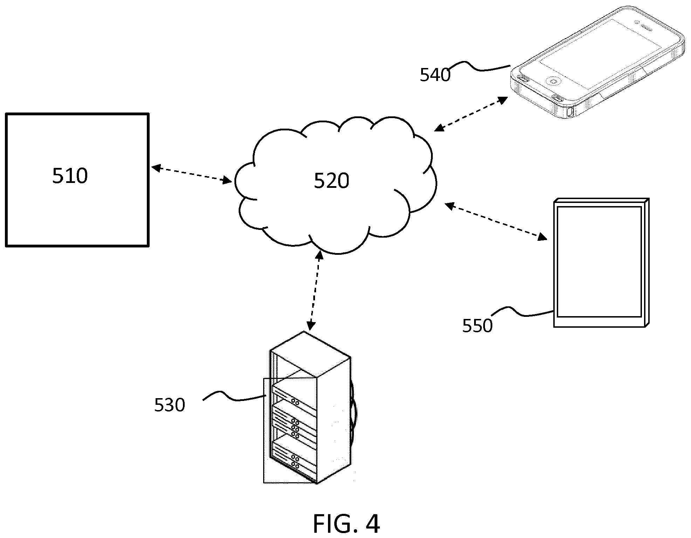

Referring now to Fig. 4, there is depicted an embodiment of a system according to an embodiment of the invention comprising an input system 510 arranged to obtain various types of information, including documents and indications of clinical context(s).

Here, the input system 510 is adapted to obtain a document comprising content at various locations within the document, and to obtain an identification of a selected clinical context. The input system 510 is adapted to output one or more signals which are representative of obtained information/data.

The input system 510 communicates the output signals via the internet 520 (using a wired or wireless connection for example) to a remotely located data processing system 530 (such as server).

The data processing system 530 is adapted to receive the one or more output signals from the input system 510 and process the received signal(s) to generate generating contextual information for a document. For instance, the data processing system 530 of Figure 4 comprises an association module (not shown) adapted to associate a document map with the document and a processing module (not shown) adapted: for each of the plurality of map sections, to maintain a count value corresponding to a clinical context; and, in response to content at a first location in the document being identified for the clinical context, to increment the count value for the map section associated with the first location within the document.

Thus, the data processing 530 provides a centrally accessible processing resource that can receive information from the input system 510 and run one or more algorithms to transform the received information into a contextual information for a document. Generated contextual information for a document can be stored by the data processing system (for example, in a database) and provided to other components of the monitoring system. Such provision of information about a document may be undertaken in response to a receiving a request (via the internet 520 for example) and/or may be undertaken without request (i.e. 'pushed').

For the purpose of receiving information about contextual information for a document from the data processing system 530, and thus to facilitate identification and/or retrieval of document content, the system further comprises first 540 and second 550 mobile computing devices.

Here, the first mobile computing device 540 is a mobile telephone device (such as a smartphone) with a display for displaying document content and/or available clinical contexts in accordance with embodiments of the proposed concepts. The second mobile computing device 550 is a mobile computer such as a Laptop or Tablet computer with a display for displaying document content and/or available clinical contexts in accordance with embodiments of the proposed concepts.

The data processing system 530 is adapted to communicate contextual information and/or document content (via output signals) to the first 540 and second 550 mobile computing devices via the internet 520 (using a wired or wireless connection for example). As mentioned above, this may be undertaken in response to receiving a request from the first 540 or second 550 mobile computing devices.

Based on the received output signals, the first 540 and second 550 mobile computing devices are adapted to display one or more graphical elements in a display area provided by their respective display. For this purpose, the first 540 and second 550 mobile computing devices each comprise a software application for processing, decrypting and/or interpreting received output signals in order to determine how to display graphical elements.

The system can therefore identify and communicate document content to users of the first 540 and second 550 mobile computing devices according to a selected clinical context. For example, each of the first 540 and second 550 mobile computing devices may be used to display graphical elements representative of identified document content to a medical practitioner, doctor, consultant, technician or caregiver for example.

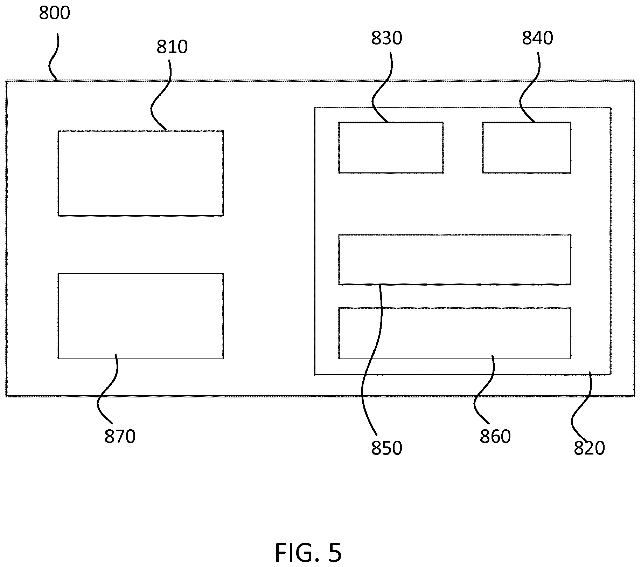

Implementations of the system of Figure 5 may vary between: (i) a situation where the data processing system 530 communicates display-ready document content, which may for example comprise display data including graphical elements (e.g. in JPEG or other image formats) that are simply displayed to a user of a mobile computing device using conventional image or webpage display (can be web based browser etc.); to (ii) a situation where the data processing system 530 communicates raw data set information that the receiving mobile computing device then processes to determine contextual information for a document, processes the contextual information in combination with the document and a selected clinical context, and then displays graphical elements based on the content identified in the document (for example, using local software running on the mobile computing device). Of course, in other implementations, the processing may be shared between the data processing system 530 and a receiving mobile computing device such that part of the contextual information generated at data processing system 530 is sent to the mobile computing device for further processing by local dedicated software of the mobile computing device. Embodiments may therefore employ server-side processing, client-side processing, or any combination thereof.

Further, where the data processing system 530 does not 'push' document-specific contextual information, but rather communicates information in response to receiving a request, the user of a device making such a request may be required to confirm or authenticate their identity and/or security credentials in order for information to be communicated.

Figure 5 illustrates an example of a computer 800 within which one or more parts of an embodiment may be employed. Various operations discussed above may utilize the capabilities of the computer 800. For example, one or more parts of a system for providing patient-specific information (or display unit thereof) may be incorporated in any element, module, application, and/or component discussed herein.

The computer 800 includes, but is not limited to, PCs, workstations, laptops, PDAs, palm devices, servers, storages, and the like. Generally, in terms of hardware architecture, the computer 800 may include one or more processors 810, memory 820, and one or more I/O devices 870 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 810 is a hardware device for executing software that can be stored in the memory 820. The processor 810 can be virtually any custom made or commercially available processor, a central processing unit (CPU), a digital signal processor (DSP), or an auxiliary processor among several processors associated with the computer 800, and the processor 810 may be a semiconductor based microprocessor (in the form of a microchip) or a microprocessor.

The memory 820 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 820 may incorporate electronic, magnetic, optical, and/or other types of storage media. Note that the memory 820 can have a distributed architecture, where various components are situated remote from one another, but can be accessed by the processor 810.

The software in the memory 820 may include one or more separate programs, each of which comprises an ordered listing of executable instructions for implementing logical functions. The software in the memory 820 includes a suitable operating system (O/S) 850, compiler 840, source code 830, and one or more applications 860 in accordance with exemplary embodiments. As illustrated, the application 860 comprises numerous functional components for implementing the features and operations of the exemplary embodiments. The application 860 of the computer 800 may represent various applications, computational units, logic, functional units, processes, operations, virtual entities, and/or modules in accordance with exemplary embodiments, but the application 860 is not meant to be a limitation.

The operating system 850 controls the execution of other computer programs, and provides scheduling, input-output control, file and data management, memory management, and communication control and related services. It is contemplated by the inventors that the application 860 for implementing exemplary embodiments may be applicable on all commercially available operating systems.

Application 860 may be a source program, executable program (object code), script, or any other entity comprising a set of instructions to be performed. When a source program, then the program is usually translated via a compiler (such as the compiler 840), assembler, interpreter, or the like, which may or may not be included within the memory 820, so as to operate properly in connection with the O/S 850. Furthermore, the application 860 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 870 may include input devices such as, for example but not limited to, a mouse, keyboard, scanner, microphone, camera, etc. Furthermore, the I/O devices 870 may also include output devices, for example but not limited to a printer, display, etc. Finally, the I/O devices 870 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 870 also include components for communicating over various networks, such as the Internet or intranet.

If the computer 800 is a PC, workstation, intelligent device or the like, the software in the memory 820 may further include a basic input output system (BIOS) (omitted for simplicity). The BIOS is a set of essential software routines that initialize and test hardware at startup, start the O/S 850, and support the transfer of data among the hardware devices. The BIOS is stored in some type of read-only-memory, such as ROM, PROM, EPROM, EEPROM or the like, so that the BIOS can be executed when the computer 800 is activated.

When the computer 800 is in operation, the processor 810 is configured to execute software stored within the memory 820, to communicate data to and from the memory 820, and to generally control operations of the computer 800 pursuant to the software. The application 860 and the O/S 850 are read, in whole or in part, by the processor 810, perhaps buffered within the processor 810, and then executed.

When the application 860 is implemented in software it should be noted that the application 860 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 860 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The description has been presented for purposes of illustration and description, and is not intended to be exhaustive or limited to the invention in the form disclosed. Many modifications and variations will be apparent to those of ordinary skill in the art. Embodiments have been chosen and described in order to best explain principles of proposed embodiments, practical application(s), and to enable others of ordinary skill in the art to understand various embodiments with various modifications are contemplated.

## Claims

1. A method (100) for generating contextual information for a document (300) comprising content (315) at various locations within the document, the method comprising:
associating (110) a document map (310) with the document, wherein the document map comprises a plurality of map sections (310A), and wherein each of the plurality of map sections is associated with a respective location within the document;
for each of the plurality of map sections, maintaining (120) a count value corresponding to a clinical context; and
in response to content at a first location in the document being identified for the clinical context, incrementing (160) the count value for the map section associated with the first location within the document.

2. The method of claim 1, further comprising:
for each of the plurality of map sections, maintaining (130) a count value corresponding to a second clinical context; and
in response to content at a second location in the document being identified for the second clinical context, incrementing (180) the count value for the map section associated with the second location within the document and corresponding to the second clinical context.

3. The method of claim 1 or 2, further comprising:
in response to content at a first location in the document (300) being identified for the clinical context, augmenting the map section associated with the first location within the document with at least a portion of the content at the first location.

4. The method of any preceding claim, wherein the document (300) comprises a plurality of portions of content (315) at differing locations in a graphical representation of the document, and wherein each of the plurality of map sections is associated with a respective different portion of content.

5. The method of claim 4, wherein the location within the document (300) associated with a first map section is defined such that it comprises a boundary corresponding to the shape of the portion of content associated with the first map section in the graphical representation of the document.

6. The method of any preceding claim, wherein the clinical context is associated with a clinical model for provisioning clinical data.

7. The method of any preceding claim, further comprising receiving a user input designating clinical context and identifying content of the document.

8. The method of any preceding claim, wherein the content comprises at least one of: an image; text; and numerical data.

9. A method (200) for retrieving information from a document (300), the method comprising:
generating (100) contextual information for the document according to any preceding claim; and
selecting (220) content at one or more locations in the document, based on the count value for each of the plurality of map sections.

10. The method of claim 9, wherein selecting (220) content comprises:
ranking the plurality of map sections based on the count values; and
selecting content at the location in the document associated with highest ranked map section.

11. The method of 9 or 10, further comprising:
obtaining (210) an indication of selected clinical context of the plurality of clinical contexts, and
wherein selecting (220) content comprises: selecting content at one or more locations in the document based on a count value corresponding to the selected clinical context for each of the plurality of map sections.

12. The method of any of claims 9 to 11, further comprising:
generating (230) an output signal for communicating information from the document based on the selected content.

13. A computer program product for retrieving information from a document, wherein the computer program product comprises a computer-readable storage medium having computer-readable program code embodied therewith, the computer-readable program code configured to perform all of the steps of any preceding claim.

14. A computer system comprising: a computer program product according to claim 13; and one or more processors adapted to perform a method according to any of claims 1 to 12 by execution of the computer-readable program code of said computer program product.

15. A system for generating contextual information for a document (300) comprising content (315) at various locations within the document, the system comprising:
an association module adapted to associate a document map with the document, wherein the document map comprises a plurality of map sections, and wherein each of the plurality of map sections is associated with a respective location within the document; and
a processing module adapted: for each of the plurality of map sections, to maintain a count value corresponding to a clinical context; and, in response to content at a first location in the document being identified for the clinical context, to increment the count value for the map section associated with the first location within the document.
